# EUROPEAN PATENT APPLICATION

(11) **EP 4 813 723 A1**
(43) Date of publication of application: **30.09.2026**
(21) Application number: 25166127.8
(22) Date of filing: 25.03.2025
(51) Int. Cl.: B60L 3/10, B60L 7/18, B60L 7/26, B60T 8/1755, B60W 30/02, B60W 30/18

(54) **BRAKE STRATEGY FOR ELECTRICALLY PROPELLED VEHICLES**

(71) Applicant: Volvo Truck Corporation, 405 08 Göteborg (SE)
(72) Inventor: HJELTE ULMEHAG, Robert, 418 76 GÖTEBORG (SE); MÖLLER, Daniel, 445 56 ALE (SE)
(74) Representative: Kransell & Wennborg KB

(57) **Abstract**

The present disclosure relates to a computer system comprising processing circuitry configured to obtain a target retardation level for a vehicle comprising a plurality of electric machines, each electric machine being operably connected to at least one wheel of the vehicle, control each of the plurality of electric machines according to a brake torque distribution scheme to obtain the target retardation level, determine, upon applying brake torques according to the brake torque distribution scheme, that a first wheel, operable by a first electric machine of the plurality of electric machines, reaches a predefined wheel slip limit of the first wheel, and in response to the first wheel reaching the predefined wheel slip limit: update the brake torque distribution scheme by increasing the brake torque on at least a second electric machine operably connected to at least a second wheel of the vehicle.

## Description

### TECHNICAL FIELD

The disclosure relates generally to a system and method for controlling braking operations in a vehicle. In particular aspects, the disclosure relates to a brake strategy for electrically propelled vehicles. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicle braking systems play a critical role in ensuring safety and stability under a wide range of driving conditions. Advances in technology have introduced systems capable of utilizing electric machines to enhance braking performance and energy efficiency. However, achieving consistent and reliable braking performance can be challenging in certain scenarios, such as when road conditions are slippery or when vehicles are subjected to sudden braking demands. In such situations, maintaining stability and achieving the desired level of retardation becomes crucial to preventing accidents, such as collisions, skidding, or loss of control during sharp turns or descents.

### SUMMARY

According to a first aspect of the disclosure, there is provided a computer system comprising processing circuitry configured to: obtain a target retardation level for a vehicle comprising a plurality of electric machines, each electric machine being operably connected to at least one wheel of the vehicle, control each of the plurality of electric machines according to a brake torque distribution scheme to obtain the target retardation level, determine, upon applying brake torques according to the brake torque distribution scheme, that a first wheel, operable by a first electric machine of the plurality of electric machines, reaches a predefined wheel slip limit of the first wheel, and in response to the first wheel reaching the predefined wheel slip limit: update the brake torque distribution scheme by increasing the brake torque on at least a second electric machine operably connected to at least a second wheel of the vehicle. The first aspect of the disclosure may seek to optimize the regeneration of electric energy during braking while maintaining the overall requested brake performance of the vehicle. A technical benefit may include that the overall brake performance of the vehicle can be obtained even when the first wheel reaches the predefined wheel slip limit. Hence, the computer system may, with the updated brake torque distribution scheme, advantageously redistribute the brake torque such that the second electric machine can apply an increased brake torque when the first electric machine is unable to apply its intended brake torque due to the first wheel reaching the predefined wheel slip limit. By enabling for a sufficient brake torque, a further technical benefit may include that enhanced safety and stability can be obtained. A further technical benefit may include improvements in regenerative braking efficiency by redistributing braking torque among electric machines, reducing reliance on mechanical service brakes and increasing energy recovery.

Optionally in some examples, including in at least one preferred example, the first wheel reaches the predefined wheel slip limit at a first brake torque level of the first electric machine, the processing circuitry being further configured to: update the brake torque distribution scheme by maintaining the brake torque of the first electric machine at the first brake torque level. A technical benefit may include that the first electric machine is operated at its maximum brake performance, thereby contributing to the overall retardation of the vehicle. A further technical benefit may include that excessive instability or wheel slip can be prevented by maintaining the brake torque of the first electric machine at its predefined safe level, avoiding sudden or unnecessary torque reductions that could compromise vehicle retardation.

Optionally in some examples, including in at least one preferred example, the processing circuitry is further configured to: determine, upon increasing the brake torque on the second electric machine, that the second wheel reaches a predefined wheel slip limit of the second wheel, and in response to the second wheel reaching the predefined wheel slip limit: update the brake torque distribution scheme by increasing the brake torque on a third electric machine operably connected to at least a third wheel of the vehicle or, in the absence of a third electric machine, control a service brake of the vehicle to apply a brake torque to obtain the target retardation level. A technical benefit may include that the target retardation level can be achieved even if additional wheels reach their slip limits, by redistributing torque to other electric machines or seamlessly transitioning to service brakes if no further regenerative braking is possible.

Optionally in some examples, including in at least one preferred example, the service brake is operatively coupled to a non-driven wheel of the vehicle. A technical benefit may include improving braking control and stability by utilizing service brakes on non-driven wheels.

Optionally in some examples, including in at least one preferred example, the brake torque distribution scheme comprises a sequential order of applying brake torque, wherein a brake torque is first applied to the first electric machine, and subsequently applied to the second electric machine in response to the first wheel reaching the predefined wheel slip limit. A technical benefit may include enabling a predictable and efficient sequence of brake torque application, which may improve system responsiveness and can ensure stable control as each wheel approaches its slip limit. Also, the steering action may not be compromised while braking.

Optionally in some examples, including in at least one preferred example, the processing circuitry is further configured to: determine, prior to updating the brake torque distribution scheme, that a wheel slip level of the second wheel is below a predefined wheel slip limit of the second wheel. A technical benefit may include that unnecessary adjustments to the brake torque distribution scheme may be avoided by ensuring that only wheels below their slip limit receive increased torque, thus maintaining braking consistency and stability.

Optionally in some examples, including in at least one preferred example, the processing circuity is further configured to: monitor a yaw rate of the vehicle, and update the brake torque distribution scheme in response to the yaw rate exceeding a predetermined yaw rate threshold. A technical benefit may include that vehicle stability may be improved during the braking operation by monitoring and responding to yaw rate changes. Excessing yaw moments can hereby be prevented which could otherwise lead to lateral instability or loss of control.

Optionally in some examples, including in at least one preferred example, the predefined wheel slip limit for each wheel is dynamically updated in response to road surface conditions, vehicle speed, and/or wheel load distribution. A technical benefit may include improved braking performance on slippery or low-friction surfaces, as the processing circuitry adjusts to wheel slip limits dynamically to maintain consistent retardation. A further technical benefit may include that improved adaptability to changing driving conditions can be obtained by dynamically adjusting slip limits based on road surface, speed, and wheel load. Hence, optimal braking performance across various environments can be obtained.

Optionally in some examples, including in at least one preferred example, the processing circuitry is further configured to: determine a maximum regenerative brake capability for each of the plurality of electric machines, and assign the electric machine having the highest maximum regenerative brake capability as the second electric machine. A technical benefit may include that regenerative braking efficiency can be improved by prioritizing electric machines with higher regenerative capabilities, thereby increasing energy recovery. The highest maximum regenerative brake capability may be the electric machine exposed to a lowest level of energy loss for the current braking action.

Optionally in some examples, including in at least one preferred example, the processing circuity is further configured to: determine a desired trajectory during braking, and assign the electric machine causing the vehicle to follow the desired trajectory as the second electric machine.

Optionally in some examples, including in at least one preferred example, the processing circuity is further configured to: determine that all wheels driven by an electric machine have reached their respective predefined wheel slip limit, and control a service brake of a non-driven wheel, in conjunction with an applied torque on each of the plurality of electric machines, to apply a brake torque to obtain the target retardation level. A technical benefit may include that efficient braking can be maintained even when all driven wheels have reached their slip limits. This may be achieved by seamlessly integrating service brakes on non-driven wheels, ensuring that the target retardation level is consistently achieved.

Optionally in some examples, including in at least one preferred example, the processing circuitry is further configured to: detect a failure in one of the plurality of electric machines, and update the brake torque distribution scheme based on the failure. A technical benefit may include that the brake torque distribution scheme can be adapted to compensate for failures in one or more electric machines, ensuring uninterrupted braking functionality.

Optionally in some examples, including in at least one preferred example, the brake torque distribution scheme is based on at least one of real-time data from a plurality of wheel slip controllers associated with a respective wheel, lateral acceleration of the vehicle, and a predicted vehicle trajectory. A technical benefit may include that precise torque distribution adjustments to maintain stability and control can be obtained.

According to a second aspect, there is provided a vehicle comprising the computer system of any of the above described examples in relation to the first aspect. Effects and features of the second aspect are thus largely analogous to those described in relation to the first aspect.

According to a third aspect, there is provided a computer-implemented method, comprising: obtaining, by processing circuitry of a computer system, a target retardation level for a vehicle comprising a plurality of electric machines, each electric machine being operably connected to at least one wheel of the vehicle, controlling, by the processing circuitry, each of the plurality of electric machines according to a brake torque distribution scheme to obtain the target retardation level, determining, by the processing circuitry, that a first wheel operable by a first electric machine of the plurality of electric machines reaches a predefined wheel slip limit of the first wheel upon applying brake torques according to the brake torque distribution scheme, and in response to the first wheel reaching the predefined wheel slip limit: updating, by the processing circuitry, the brake torque distribution scheme by increasing the brake torque on at least a second electric machine operably connected to at least a second wheel of the vehicle. The third aspect of the disclosure may seek to optimize the regeneration of electric energy during braking while maintaining the overall requested brake performance of the vehicle. A technical benefit may include that the overall brake performance of the vehicle can be obtained even when the first wheel reaches the predefined wheel slip limit. Hence, the computer system may, with the updated brake torque distribution scheme, advantageously redistribute the brake torque such that the second electric machine can apply an increased brake torque when the first electric machine is unable to apply its intended brake torque due to the first wheel reaching the predefined wheel slip limit. By enabling for a sufficient brake torque, a further technical benefit may include that enhanced safety and stability can be obtained. A further technical benefit may include improvements in regenerative braking efficiency by redistributing braking torque among electric machines, reducing reliance on mechanical service brakes and increasing energy recovery.

Optionally in some examples, including in at least one preferred example, the method further comprises: determining, by the processing circuitry, that the second wheel reaches a predefined wheel slip limit of the second wheel upon increasing the brake torque on the second electric machine, and in response to the second wheel reaching the predefined wheel slip limit: updating, by the processing circuitry, the brake torque distribution scheme by increasing the brake torque on a third electric machine operably connected to at least a third wheel of the vehicle or, in the absence of a third electric machine, control a service brake of the vehicle to apply a brake torque to obtain the target retardation level. A technical benefit may include that the target retardation level can be achieved even if additional wheels reach their slip limits, by redistributing torque to other electric machines or seamlessly transitioning to service brakes if no further regenerative braking is possible.

Optionally in some examples, including in at least one preferred example, the method further comprises: determining, by the processing circuitry prior to updating the brake torque distribution scheme, that a wheel slip level of the second wheel is below a predefined wheel slip limit of the second wheel. A technical benefit may include that unnecessary adjustments to the brake torque distribution scheme may be avoided by ensuring that only wheels below their slip limit receive increased torque, thus maintaining braking consistency and stability.

Optionally in some examples, including in at least one preferred example, the method further comprises: monitoring, by the processing circuitry, a yaw rate of the vehicle, and updating, by the processing circuitry, the brake torque distribution scheme in response to the yaw rate exceeding a predetermined yaw rate threshold. A technical benefit may include that vehicle stability may be improved during the braking operation by monitoring and responding to yaw rate changes. Excessing yaw moments can hereby be prevented which could otherwise lead to lateral instability or loss of control.

Optionally in some examples, including in at least one preferred example, the method further comprises: determining, by the processing circuitry, a maximum regenerative brake capability for each of the plurality of electric machines, and assigning, by the processing circuitry, the electric machine having the highest maximum regenerative brake capability as the second electric machine. A technical benefit may include that regenerative braking efficiency can be improved by prioritizing electric machines with higher regenerative capabilities, thereby increasing energy recovery.

Further effects and features of the third aspect are largely analogous to those described above in relation to the first aspect.

According to a fourth aspect, there is provided a computer program product comprising program code for performing, when executed by the processing circuitry, the method of any of the examples described above in relation to the third aspect.

According to a fifth aspect, there is provided a non-transitory computer-readable storage medium comprising instructions, which when executed by the processing circuitry, cause the processing circuitry to perform the method of any of the examples described above in relation to the third aspect.

Effects and features of the fourth and fifth aspects are largely analogous to those described above in relation to the first and third aspects.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a vehicle according to an example.
Fig. 2 is an exemplary illustration of a driveline of the vehicle according to an example.
Fig. 3 is an exemplary illustration of a brake torque distribution scheme according to an example.
Fig. 4 is an exemplary illustration of a flow chart according to an example.
Fig. 5 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The following disclosure aims at optimizing the regeneration of electric energy during braking while maintaining the overall requested brake performance of the vehicle. A technical benefit may include that the overall brake performance of the vehicle can be obtained even when the first wheel reaches the predefined wheel slip limit.

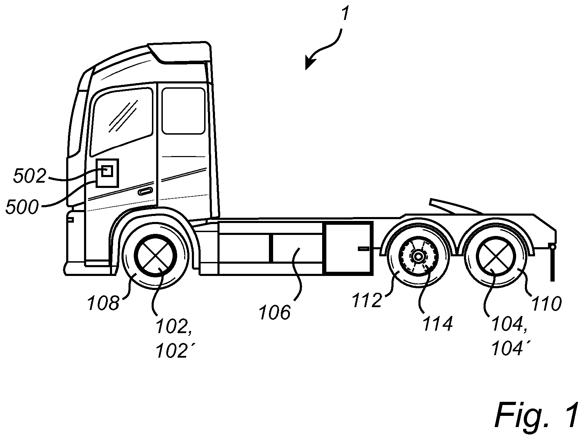

Reference is made to Fig. 1 which is an exemplary illustration of a vehicle 1 according to an example. The vehicle 1 depicted in Fig. 1 is preferably a battery electric vehicle also commonly referred to as a BEV. The vehicle may alternatively be a fuel cell electric vehicle also commonly referred to as a FCEV. In both examples, the vehicle 1 comprises a plurality of electric machines 102, 102', 104, 104' operative to propel the vehicle 1. The vehicle 1 also comprises a traction battery 106 from which electric power is fed to the plurality of electric machines 102, 102', 104, 104' during propulsion. The electric machines 102, 102', 104, 104' are also arranged to generate electric power during braking, which can be referred to as recuperative braking or regenerative braking.

Each of the electric machines 102, 102', 104, 104' is operatively connected to a respective wheel 108, 110 of the vehicle 1. In the example depicted in Fig. 1, the electric machines 102, 102', 104, 104' are arranged as wheel hub motors. Hence, each electric machine is connected to a respective wheel of the vehicle 1. Fig. 1 exemplifies a vehicle 1 having a pair of front wheels 108, also referred to as the first wheels, a pair of rearmost rear wheels 110, also referred to as the second wheels, and a pair of frontmost rear wheels 112, also referred to as the third wheels. In the example depicted in Fig. 1, each wheel of the pair of front wheels 108 is provided with an electric machine 102, in the following exemplified as the first electric machine 102 and the third electric machine 102', and each wheel of pair of rearmost rear wheels 110 is provided with an electric machine 104, in the following exemplified as the second electric machine 104 and the fourth electric machine 104'. The wheels of the pair of frontmost rear wheels 112 are not provided with an electric machine in this example. The wheels of the pair of frontmost rear wheels 112 each has a service brake 114. Although not depicted in Fig. 1, the front wheels 108 as well as the rearmost rear wheels 110 may also be provided with service brakes.

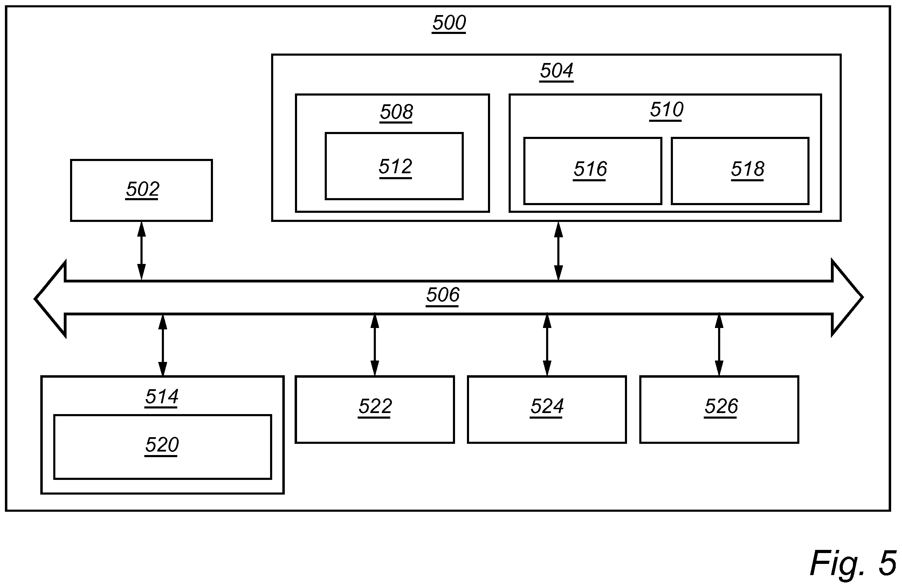

The vehicle 1 further comprises a computer system 500. The computer system 500 comprises processing circuitry 502 which is configured to operate according to the below description. The computer system 500 and processing circuitry 502 are operatively coupled to the electric machines 102, 104 and optionally also to the service brakes 114. Details of the computer system 500 will also be presented below with reference to the description of Fig. 5.

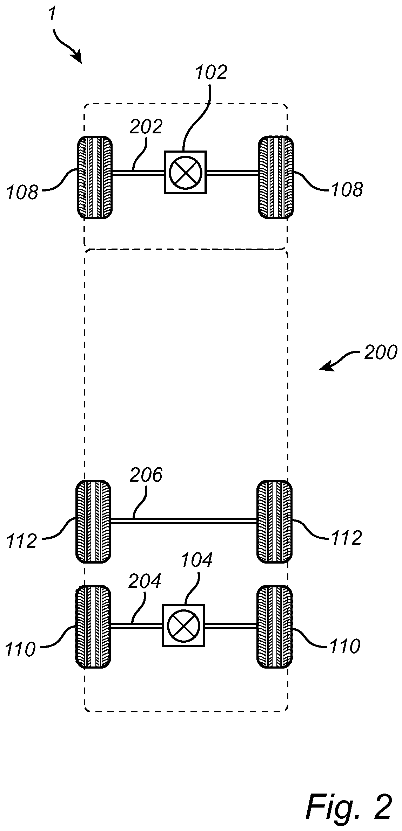

Reference is made to Fig. 2 which is an exemplary illustration of a driveline 200 of the vehicle 1 according to an example. In particular, Fig. 2 is a view from above illustrating details of the driveline 200 according to an example. The driveline 200 comprises the above described plurality of electric machines 102, 104. In the example depicted in Fig. 2, a single first electric machine 102 is connected to the front pair of wheels 108 via a first wheel shaft 202. In a similar vein, a single second electric machine 104 is connected to the pair of rearmost rear wheels 110. In a similar vein as for the example of Fig. 1, the exemplified vehicle 1 in Fig. 2 does not comprise an electric machine connected to the pair of frontmost rear wheels 112. The pair of frontmost rear wheels 112 are connected to a third wheel shaft 206.

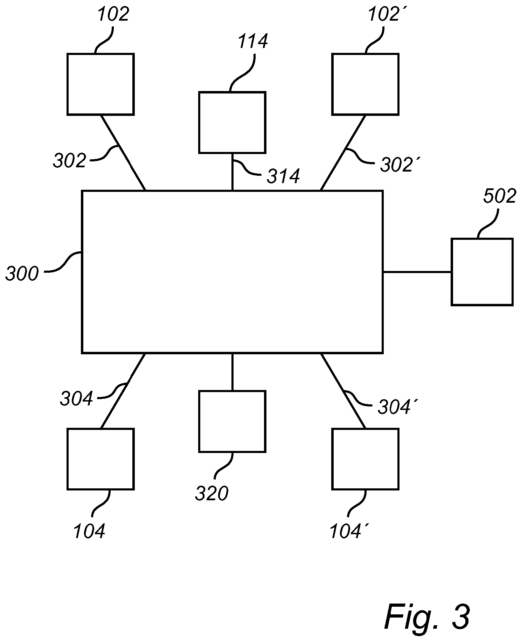

During operation of the vehicle 1, and in particularly during a braking operation of the vehicle 1, the processing circuitry controls the plurality of electric machines 102, 104 and optionally also the service brakes 114 according to a brake torque distribution scheme to obtain a target retardation level of the vehicle 1. Reference is made to Fig. 3 for describing the brake torque distribution scheme 300 in further detail according to an example. The brake torque distribution scheme 300 is depicted as a brake torque distribution manager arranged separate from the processing circuity 502 but should also be construed as forming part of the processing circuitry 502. The target retardation level may be obtained by the processing circuitry 502 in different manners. For example, the target retardation level may be obtained by means of an operator pushing the brake pedal, or by means of the operator releasing the pressure from the accelerator pedal, or data with retardation instructions from an autonomously controlled propulsion system, etc. The processing circuitry 502 may instruct the first electric machine 102 to apply a first brake torque on the first wheel(s), the second electric machine 104 to apply a brake torque on the second wheel(s), and optionally also instruct the service brake 114 to apply a brake torque on the third wheel(s). The brake torque distribution may vary depending on e.g. the load distribution of the vehicle 1, if the vehicle 1 is laden or unladen, tire pressure in the various wheels of the vehicle 1, etc. Hence, the brake torque distribution scheme may vary in response to vehicle specific parameters such as e.g. weight, load distribution, tire pressure, etc. Further, the brake torque distribution scheme may also be based on at least one of real-time data from a plurality of wheel slip controllers associated with a respective wheel, lateral acceleration of the vehicle, and a predicted vehicle trajectory.

In further detail, the processing circuitry 502 may transmit first brake torque data 302 instructing the first electric machine 102 to apply a brake torque at a first brake torque level, second brake torque data 304 instructing the second electric machine 104 to apply a brake torque at a second brake torque level, third brake torque data 302' instructing the third electric machine 102' to apply a brake torque at a third brake torque level, and fourth brake torque data 304' instructing the fourth electric machine 104' to apply a brake torque at a fourth brake torque level. As indicated above, the first brake torque data 302 may instruct the first electric machine 102 to solely apply a brake torque. In such example, the second 304, third 302' and fourth 304' brake torque data instruct the respective electric machine to not apply a torque. Alternatively, and as also indicated above, the first, second, third and fourth brake torque levels may each correspond to a specific ratio of the overall brake torque, which ratios together may correspond to the overall desired brake torque.

The wheels 108, 110, 112 of the vehicle 1 may be controlled not to exceed a predefined wheel slip limit. The predefined wheel slip limit may be the same for all wheels or may be set as unique wheel slip limits for the respective wheels. Wheel slip should be construed as a difference between the wheel speed over ground and the actual wheel speed. As a non-limiting example, a tire model can be used to translate between a maximum brake torque and wheel slip. As stated, wheel slip relates to a difference between wheel rotational velocity and speed over ground. Wheel speed is a rotational speed of the wheel, given in units of, e.g., rotations per minute (rpm) or angular velocity in terms radians/second (rad/s) or degrees/second (deg/s). Accordingly, a wheel exposed to a brake torque may reach the wheel slip limit at a certain brake torque level. Each wheel of the vehicle 1 may be associated with a respective wheel slip controller that sets, or determines, the predefined wheel slip limit for their corresponding wheel.

The predefined wheel slip limit may be dynamically updated in response various wheel specific parameters or various ambient conditions. According to non-limiting examples, the wheel slip limit may be dynamically updated in response to road surface conditions, vehicle speed, and/or wheel load distribution.

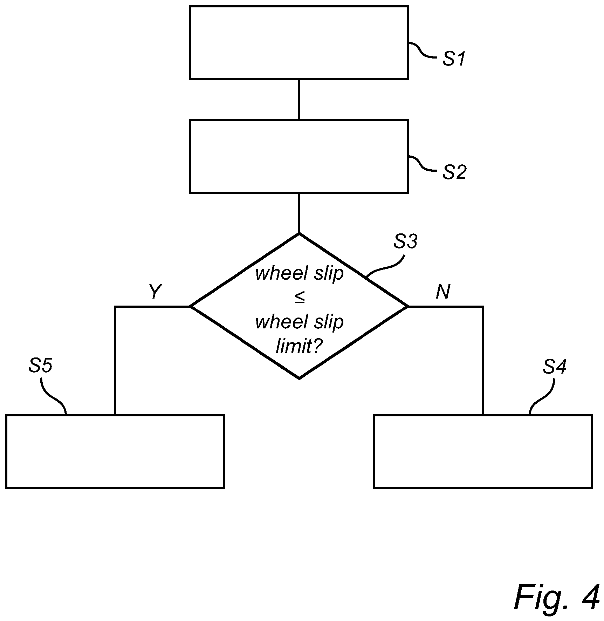

With additional reference to Fig. 4 which is an exemplary illustration of a flow chart according to an example. During operation of the vehicle 1, in particular during a braking operation of the vehicle 1, the processing circuitry 502 obtains S1 a target retardation level, i.e. a desired retardation for the vehicle. The target retardation may advantageously be a desired deceleration expressed in meter per square seconds. Based on the specific brake torque distribution scheme as exemplified above, the processing circuitry 502 controls S2 the first 102, second 104, third 102' and fourth 104' electric machines to apply a brake torque. As exemplified above, the first electric machine 102 may solely apply the brake torque and in such case, the processing circuitry 502 controls the second 104, third 102' and fourth 104' electric machines to apply zero brake torque. Alternatively, the first electric machine 102 may apply e.g. 40% of the total brake torque, the second machine 30%, the third electric machine 20% and the fourth electric machine 10%. The latter ratios should be construed as mere examples for further understanding by the skilled reader.

When the processing circuitry 502 controls the electric machines to apply the brake torques according to the brake torque distribution scheme 300, the processing circuitry 502 determines S3 whether the first wheel 108 reaches the predefined wheel slip limit. Thus, the first wheel 108 may reaches the predefined wheel slip limit at a torque level below the torque level of the brake torque distribution scheme 300 for the first electric machine 102. For example, the first electric machine 102 may have a desired torque of 2500 Nm in the brake torque distribution scheme 300, but the first wheel reaches the predefined slip limit at 2000 Nm. If, or when, the first wheel 108 reaches the predefined wheel slip limit for a brake torque level below the intended brake torque level of the first electric machine 102, i.e. the first wheel 108 reaches the predefined wheel slip limit, the processing circuitry 502 updates S4 the brake torque distribution scheme 300 by increasing the brake torque of one or more of the remaining electric machines 102', 104, 104' of the vehicle 1. According to the above non-limiting example, the brake torque level of the second electric machine can be increased by 500 Nm. Obviously, the 500 Nm brake torque may be distributed between the second 104, third 102' and fourth 104' electric machines. As an alternative or as a complement, the processing circuitry 502 may determine, prior to updating the brake torque distribution scheme, that a wheel slip level of the second wheel is below a predefined wheel slip limit of the second wheel. Should the second wheel already have reached its predefined wheel slip limit by the brake torque applied by the second electric machine, the brake torque distribution scheme may be updated by increasing the brake torque of the third electric machine. The processing circuitry 502 may also determine a maximum regenerative brake capability for each of the plurality of electric machines, i.e. the maximum regenerative brake capability for each of the second 104, third 102' and fourth 104' electric machines. If the first wheel reaches the predefined wheel slip limit, the processing circuitry 502 may update the brake torque distribution scheme by increasing the brake torque of the electric machine having the highest maximum brake torque capability. Hence, the electric machine having the highest brake torque capability is assigned as the second electric machine, i.e. the next in turn to increase the torque.

If the predefined wheel slip limit is not reached by the first wheel, the brake torque distribution scheme 300 is obviously maintained S5.

When updating the brake torque distribution scheme 300, the brake torque of the first electric machine 102 is maintained at the brake torque level causing the first wheel to obtain the predefined wheel slip limit. According to the non-limiting example above, if the first wheel reaches the predefined wheel slip limit at a brake torque level of 2000 Nm, the updated brake torque distribution scheme sets the brake torque at 2000 Nm for the first electric machine. The first electric machine 102 can here be defined as being saturated. Saturation refers to a condition where the first electric machine cannot apply additional torque due to the wheel slip limit.

Should the updated brake torque distribution scheme 300 result in that brake torque of the second electric machine 104 causes the second wheel 110 to also reach the predefined wheel slip limit, the brake torque distribution scheme 300 is updated by increasing the brake torque on the third electric machine 102' to obtain the target retardation level. In the example depicted in Fig. 2 with two electric machines, the processing circuitry 502 updates the brake torque distribution scheme 300 by transmitting service brake torque data 314 to the service brake 114, the service brake torque data instructing the service brake to apply a brake torque to obtain the target retardation level.

The brake torque distribution scheme 300 is thus preferably updated in such a manner that the electric machines 102, 102', 104, 104' are prioritized to apply brake torque since this will optimize overall energy recuperation during braking. However, for situations where all wheels operable by an electric machine reach their respective predefined wheel slip limit, the processing circuitry 502 controls the service brake to apply a brake torque to obtain the target retardation level. The vehicle speed is thus reduced using a brake torque by the service brake in conjunction with brake torque of the electric machines. An anti-lock braking system (ABS) may also intervene to prevent the wheels with the service brakes to lock. The processing circuitry 502 may in such situation transmit data to an ABS controller 320.

Furthermore, the processing circuitry 502 may also be configured to detect if one or more of the electric machines are not operated as intended, i.e. the electric machine is malfunctioning. If this is the case, the brake torque distribution scheme is updated based on the failure. Hereby, a functioning electric machine receives instructions to increase the torque. Also, the processing circuitry 502 can monitor a yaw rate of the vehicle. To avoid excessive yaw rate, the processing circuitry 502 may update the brake torque distribution scheme 300 in response to the yaw rate exceeding a predetermined yaw rate threshold. The predetermined yaw rate threshold may be a dynamic threshold. Such dynamic threshold can be based on the current or desired vehicle trajectory. The dynamic threshold can also be derived from the steering wheel angle. Hence, the updated brake torque distribution scheme 300 may assure that excessive yaw is prevented.

Fig. 5 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device
interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### EXAMPLE LIST

Example 1. A computer system comprising processing circuitry configured to obtain a target retardation level for a vehicle comprising a plurality of electric machines, each electric machine being operably connected to at least one wheel of the vehicle, control each of the plurality of electric machines according to a brake torque distribution scheme to obtain the target retardation level, determine, upon applying brake torques according to the brake torque distribution scheme, that a first wheel, operable by a first electric machine of the plurality of electric machines, reaches a predefined wheel slip limit of the first wheel, and in response to the first wheel reaching the predefined wheel slip limit: update the brake torque distribution scheme by increasing the brake torque on at least a second electric machine operably connected to at least a second wheel of the vehicle.

Example 2. The computer system of example 1, wherein the first wheel reaches the predefined wheel slip limit at a first brake torque level of the first electric machine, the processing circuitry being further configured to: update the brake torque distribution scheme by maintaining the brake torque of the first electric machine at the first brake torque level.

Example 3. The computer system of any one of examples 1 or 2, the processing circuitry being further configured to: determine, upon increasing the brake torque on the second electric machine, that the second wheel reaches a predefined wheel slip limit of the second wheel, and in response to the second wheel reaching the predefined wheel slip limit: update the brake torque distribution scheme by increasing the brake torque on a third electric machine operably connected to at least a third wheel of the vehicle or, in the absence of a third electric machine, control a service brake of the vehicle to apply a brake torque to obtain the target retardation level.

Example 4. The computer system of example 3, wherein the service brake is operatively coupled to a non-driven wheel of the vehicle.

Example 5. The computer system of any one of the preceding examples, wherein the brake torque distribution scheme comprises a sequential order of applying brake torque, wherein a brake torque is first applied to the first electric machine, and subsequently applied to the second electric machine in response to the first wheel reaching the predefined wheel slip limit.

Example 6. The computer system of any one of the preceding examples, wherein the processing circuitry is further configured to: determine, prior to updating the brake torque distribution scheme, that a wheel slip level of the second wheel is below a predefined wheel slip limit of the second wheel.

Example 7. The computer system of any one of the preceding examples, wherein the processing circuity is further configured to: monitor a yaw rate of the vehicle, and update the brake torque distribution scheme in response to the yaw rate exceeding a predetermined yaw rate threshold.

Example 8. The computer system of any one of the preceding examples, wherein the predefined wheel slip limit for each wheel is dynamically updated in response to road surface conditions, vehicle speed, and/or wheel load distribution.

Example 9. The computer system of any one of the preceding examples, wherein the processing circuitry is further configured to: determine a maximum regenerative brake capability for each of the plurality of electric machines, and assign the electric machine having the highest maximum regenerative brake capability as the second electric machine.

Example 10. The computer system of any one of the preceding examples, wherein the processing circuity is further configured to: determine that all wheels driven by an electric machine have reached their respective predefined wheel slip limit, and control a service brake of a non-driven wheel, in conjunction with an applied torque on each of the plurality of electric machines, to apply a brake torque to obtain the target retardation level.

Example 11. The computer system of any one of the preceding examples, wherein the processing circuitry is further configured to: detect a failure in one of the plurality of electric machines, and update the brake torque distribution scheme based on the failure.

Example 12. The computer system of any one of the preceding examples, wherein the brake torque distribution scheme is based on at least one of real-time data from a plurality of wheel slip controllers associated with a respective wheel, lateral acceleration of the vehicle, and a predicted vehicle trajectory.

Example 13. A vehicle comprising the computer system of any of examples 1 - 12.

Example 14. A computer-implemented method, comprising: obtaining, by processing circuitry of a computer system, a target retardation level for a vehicle comprising a plurality of electric machines, each electric machine being operably connected to at least one wheel of the vehicle, controlling, by the processing circuitry, each of the plurality of electric machines according to a brake torque distribution scheme to obtain the target retardation level, determining, by the processing circuitry, that a first wheel operable by a first electric machine of the plurality of electric machines reaches a predefined wheel slip limit of the first wheel upon applying brake torques according to the brake torque distribution scheme, and in response to the first wheel reaching the predefined wheel slip limit: updating, by the processing circuitry, the brake torque distribution scheme by increasing the brake torque on at least a second electric machine operably connected to at least a second wheel of the vehicle.

Example 15. The method of example 14, further comprising: determining, by the processing circuitry, that the second wheel reaches a predefined wheel slip limit of the second wheel upon increasing the brake torque on the second electric machine, and in response to the second wheel reaching the predefined wheel slip limit: updating, by the processing circuitry, the brake torque distribution scheme by increasing the brake torque on a third electric machine operably connected to at least a third wheel of the vehicle or, in the absence of a third electric machine, control a service brake of the vehicle to apply a brake torque to obtain the target retardation level.

Example 16. The method of any one of examples 14 or 15, further comprising: determining, by the processing circuitry prior to updating the brake torque distribution scheme, that a wheel slip level of the second wheel is below a predefined wheel slip limit of the second wheel.

Example 17. The method of any one of examples 14 - 16, further comprising: monitoring, by the processing circuitry, a yaw rate of the vehicle, and updating, by the processing circuitry, the brake torque distribution scheme in response to the yaw rate exceeding a predetermined yaw rate threshold.

Example 18. The method of any one of examples 14 - 17, further comprising: determining, by the processing circuitry, a maximum regenerative brake capability for each of the plurality of electric machines, and assigning, by the processing circuitry, the electric machine having the highest maximum regenerative brake capability as the second electric machine.

Example 19. A computer program product comprising program code for performing, when executed by the processing circuitry, the method of any of examples 14 - 18.

Example 20. A non-transitory computer-readable storage medium comprising instructions, which when executed by the processing circuitry, cause the processing circuitry to perform the method of any of examples 14 - 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:
obtain a target retardation level for a vehicle comprising a plurality of electric machines, each electric machine being operably connected to at least one wheel of the vehicle,
control each of the plurality of electric machines according to a brake torque distribution scheme to obtain the target retardation level,
determine, upon applying brake torques according to the brake torque distribution scheme, that a first wheel, operable by a first electric machine of the plurality of electric machines, reaches a predefined wheel slip limit of the first wheel, and in response to the first wheel reaching the predefined wheel slip limit:
update the brake torque distribution scheme by increasing the brake torque on at least a second electric machine operably connected to at least a second wheel of the vehicle.

2. The computer system of claim 1, wherein the first wheel reaches the predefined wheel slip limit at a first brake torque level of the first electric machine, the processing circuitry being further configured to:
update the brake torque distribution scheme by maintaining the brake torque of the first electric machine at the first brake torque level.

3. The computer system of any one of claims 1 or 2, the processing circuitry being further configured to:
determine, upon increasing the brake torque on the second electric machine, that the second wheel reaches a predefined wheel slip limit of the second wheel, and in response to the second wheel reaching the predefined wheel slip limit:
update the brake torque distribution scheme by increasing the brake torque on a third electric machine operably connected to at least a third wheel of the vehicle or, in the absence of a third electric machine, control a service brake of the vehicle to apply a brake torque to obtain the target retardation level.

4. The computer system of claim 3, wherein the service brake is operatively coupled to a non-driven wheel of the vehicle.

5. The computer system of any one of the preceding claims, wherein the brake torque distribution scheme comprises a sequential order of applying brake torque, wherein a brake torque is first applied to the first electric machine, and subsequently applied to the second electric machine in response to the first wheel reaching the predefined wheel slip limit.

6. The computer system of any one of the preceding claims, wherein the processing circuitry is further configured to:
determine, prior to updating the brake torque distribution scheme, that a wheel slip level of the second wheel is below a predefined wheel slip limit of the second wheel.

7. The computer system of any one of the preceding claims, wherein the processing circuity is further configured to:
monitor a yaw rate of the vehicle, and
update the brake torque distribution scheme in response to the yaw rate exceeding a predetermined yaw rate threshold.

8. The computer system of any one of the preceding claims, wherein the processing circuitry is further configured to:
determine a maximum regenerative brake capability for each of the plurality of electric machines, and
assign the electric machine having the highest maximum regenerative brake capability as the second electric machine.

9. The computer system of any one of the preceding claims, wherein the processing circuity is further configured to:
determine that all wheels driven by an electric machine have reached their respective predefined wheel slip limit, and
control a service brake of a non-driven wheel, in conjunction with an applied torque on each of the plurality of electric machines, to apply a brake torque to obtain the target retardation level.

10. The computer system of any one of the preceding claims, wherein the processing circuitry is further configured to:
detect a failure in one of the plurality of electric machines, and
update the brake torque distribution scheme based on the failure.

11. The computer system of any one of the preceding claims, wherein the brake torque distribution scheme is based on at least one of real-time data from a plurality of wheel slip controllers associated with a respective wheel, lateral acceleration of the vehicle, and a predicted vehicle trajectory.

12. A vehicle comprising the computer system of any of claims 1 - 11.

13. A computer-implemented method, comprising:
obtaining, by processing circuitry of a computer system, a target retardation level for a vehicle comprising a plurality of electric machines, each electric machine being operably connected to at least one wheel of the vehicle,
controlling, by the processing circuitry, each of the plurality of electric machines according to a brake torque distribution scheme to obtain the target retardation level,
determining, by the processing circuitry, that a first wheel operable by a first electric machine of the plurality of electric machines reaches a predefined wheel slip limit of the first wheel upon applying brake torques according to the brake torque distribution scheme, and in response to the first wheel reaching the predefined wheel slip limit:
updating, by the processing circuitry, the brake torque distribution scheme by increasing the brake torque on at least a second electric machine operably connected to at least a second wheel of the vehicle.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
